# FASCICULE DE BREVET EUROPEEN

(11) **EP 3 162 533 B1**
(45) Date de publication et mention de la délivrance du brevet: **20.06.2018**
(21) Numéro de dépôt: 16194976.3
(22) Date de dépôt: 21.10.2016
(51) Int. Cl.: B29C 53/80, B29C 53/66

(54) **INSTALLATION POUR LA FABRICATION D'UN REVÊTEMENT DE PROTECTION THERMIQUE D'UN CORPS OU D'UN ENSEMBLE ARRIÈRE DE PROPULSEUR ET PROCÉDÉS ASSOCIÉS**
ANLAGE FÜR DIE HERSTELLUNG EINER WÄRMESCHUTZVERKLEIDUNG EINES KÖRPERS ODER EINER RÜCKWÄRTIGEN EINHEIT EINES TRIEBWERKS, UND ENTSPRECHENDE VERFAHREN
FACILITY FOR MANUFACTURING A COATING FOR THERMAL PROTECTION OF A BODY OR A REAR ASSEMBLY OF A THRUSTER AND RELATED METHODS

(30) Priorité: 30.10.2015 FR 1560406
(43) Date de publication de la demande: 03.05.2017
(73) Titulaire: ArianeGroup SAS, 75015 Paris (FR)
(72) Inventeur: VENNET, Caroline, 33110 Le Bouscat (FR); BORIE, Edouard, 33320 Eysines (FR); RODOLAUSSE, Julien, 33127 Martignas sur Jalles (FR); LASSALLE, Pierre, 33160 Saint Medard en Jalles (FR); MUNOZ, Matthieu, 33160 Saint Medard en Jalles (FR); BOIRIE, Johan, 33160 Cestas (FR)
(74) Mandataire: Laïk, Eric

(56) Documents cités:
- EP-A1- 2 060 383
- WO-A1-2014/118340

## Description

### Arrière-plan de l'invention

L'invention concerne une installation pour la fabrication d'un revêtement de protection thermique d'un corps ou d'un ensemble arrière de propulseur, notamment de propulseur à propergol solide. L'invention concerne encore un procédé de fabrication d'un tel revêtement ainsi qu'un procédé de fabrication d'un corps ou d'un ensemble arrière de propulseur muni d'un tel revêtement de protection thermique. L'invention concerne en particulier la fabrication d'un revêtement de protection thermique d'un corps ou d'un ensemble arrière de moteur-fusée.

Un corps de propulseur à propergol solide se compose essentiellement d'une enveloppe résistante, par exemple en matériau composite, habituellement munie d'un revêtement interne de protection thermique qui doit remplir trois fonctions essentielles: protéger thermiquement l'enveloppe résistante en composite de l'agression des gaz chauds résultant de la combustion du propergol, atténuer les contraintes mécaniques engendrées par la déformation sous pression de l'enveloppe résistante pendant la phase de combustion du propergol, et assurer l'étanchéité de l'enveloppe résistante contre les fuites de gaz.

Il existe différents procédés pour appliquer les revêtements de protection thermique à l'intérieur de l'enveloppe résistante d'un corps de propulseur. L'un d'entre eux consiste, à partir d'un caoutchouc élaboré par des moyens classiques de l'industrie du caoutchouc (mélangeurs à cylindre, mélangeurs internes, ...) à l'état de semi-produit non vulcanisé et de consistance visqueuse, à transformer ce caoutchouc en feuilles d'élastomère destinées à être découpées puis drapées sur un mandrin avant vulcanisation en autoclave. Les différents éléments de protection thermique ainsi réalisés sont alors désassemblés de leurs mandrins respectifs pour être assemblés sur un autre mandrin (généralement métallique et démontable) utilisé pour le bobinage filamentaire de l'enveloppe en composite sur la protection thermique ainsi constituée. Ce procédé conduit à des longs cycles de réalisation qui confèrent à cette technologie un coût de mise en oeuvre particulièrement élevé. En effet, il nécessite un nombre important d'outillages et présente en outre une succession d'opérations discontinues dont certaines sont manuelles.

Un autre type de procédé connu permet de réduire les coûts de mise en oeuvre. Il consiste à recouvrir un mandrin d'une couche d'élastomère avant de former l'enveloppe résistante du corps du propulseur par enroulement filamentaire d'un matériau composite. Selon un tel procédé, la couche d'élastomère est réalisée par dépose d'une bande extrudée sur toute la surface externe d'un mandrin en rotation. Le revêtement ainsi obtenu est alors vulcanisé en autoclave avant l'enroulement filamentaire. Bien qu'un tel procédé permette de simplifier le procédé de réalisation du revêtement interne de protection thermique, le revêtement obtenu ne présente pas toujours les propriétés initialement prévues.

On connaît le document WO 2014/118340 qui divulgue un appareil pour extruder un mélange d'élastomère. On connaît aussi le document EP 2 060 383 qui divulgue un procédé de mesure d'une teneur en résine.

Il existe donc un besoin pour fournir une installation pour la fabrication d'un revêtement de protection thermique d'un corps ou d'un ensemble arrière de propulseur permettant de fabriquer de manière relativement simple et rapide un tel revêtement tout en permettant d'obtenir de manière fiable pour le revêtement ainsi fabriqué les propriétés attendues.

### Objet et résumé de l'invention

A cet effet, l'invention propose, selon un premier aspect, une installation pour la fabrication d'un revêtement de protection thermique d'un corps ou d'un ensemble arrière de propulseur, ladite installation comprenant au moins :
- une extrudeuse présentant une filière comprenant un orifice de sortie au travers duquel une bande en matériau élastomère est destinée à être extrudée, l'extrudeuse étant munie d'un système de commande de la filière configuré pour faire varier la taille de l'orifice de sortie de la filière,
- un mandrin configuré pour être mis en rotation sur lui-même,
- une tête de dépose configurée pour déposer la bande sur le mandrin, la tête de dépose et le mandrin étant configurés pour être mis en mouvement relatif l'un par rapport à l'autre le long de l'axe longitudinal du mandrin,
- un système de convoyage configuré pour transporter la bande depuis l'orifice de sortie de la filière jusqu'à la tête de dépose, et
- un système de contrôle d'épaisseur configuré pour mesurer l'épaisseur de la bande sur la tête de dépose et sur le mandrin et pour comparer chaque valeur d'épaisseur mesurée à une valeur prédéterminée, ledit système de contrôle d'épaisseur étant en outre configuré pour commander, en fonction du résultat de ces comparaisons, le système de commande de la filière afin de faire varier la taille de l'orifice de sortie de la filière.

Les inventeurs ont constaté que, dans les techniques antérieures, l'épaisseur de la bande d'élastomère extrudée varie entre le moment où cette bande est extrudée au travers de l'orifice de sortie de la filière et le moment où cette bande est déposée sur le mandrin. Cette variation d'épaisseur dépend de différents paramètres (pression, vitesse de la bande, température...) mais son degré demeure toutefois difficile à anticiper. Le fait que l'épaisseur de la bande extrudée varie lors de son trajet jusqu'à la zone de dépôt sur le mandrin conduit, dans certains cas, au non-respect des exigences dimensionnelles pour le revêtement de protection thermique et donc à des propriétés sous-optimales. Du fait de la mise en oeuvre du système de contrôle d'épaisseur associé au système de commande de la filière, l'invention permet avantageusement d'adapter le fonctionnement de l'installation au degré de variation d'épaisseur de la bande extrudée constaté au niveau de la tête de dépose et sur le mandrin. L'invention permet ainsi de composer avec ce phénomène de variation d'épaisseur de la bande extrudée afin d'obtenir de manière relativement simple et fiable un revêtement de protection thermique présentant les propriétés attendues. Concrètement, si le système de contrôle d'épaisseur détecte que l'épaisseur de la bande sur la tête de dépose et que l'épaisseur de la bande sur le mandrin sont chacune supérieures à la valeur d'épaisseur prédéterminée, ce système de contrôle peut alors rétroagir sur le système de commande de la filière afin de réduire la taille de l'orifice de sortie de la filière. De manière analogue, si le système de contrôle d'épaisseur détecte que l'épaisseur de la bande sur la tête de dépose et que l'épaisseur de la bande sur le mandrin sont chacune inférieures à la valeur d'épaisseur prédéterminée, ce système de contrôle rétroagit alors sur le système de commande de la filière afin d'augmenter la taille de l'orifice de sortie de la filière. Une fois que le système de contrôle d'épaisseur détecte que la bande présente l'épaisseur prédéterminée, la taille de l'orifice de sortie est maintenue inchangée jusqu'à détection d'une éventuelle déviation ultérieure de l'épaisseur de la bande.

Dans un exemple de réalisation, la tête de dépose peut comprendre un organe d'application de la bande sur le mandrin et le système de contrôle d'épaisseur peut en outre être configuré pour commander, en fonction du résultat des comparaisons d'épaisseurs, la pression d'application de la bande sur le mandrin imposée par l'organe d'application.

L'organe d'application impose une pression d'application à la bande lors de son dépôt sur le mandrin afin de faire adhérer celle-ci au mandrin. Du fait de la pression d'application, l'épaisseur de la bande sur le mandrin est inférieure ou égale à l'épaisseur que cette bande présentait sur la tête de dépose (i.e. juste avant dépôt sur le mandrin). Une augmentation de la pression d'application conduit à une accentuation de la réduction d'épaisseur de la bande entre la tête de dépose et le mandrin. Par conséquent, dans cet exemple de réalisation, si le système de contrôle d'épaisseur détecte que l'épaisseur de la bande sur la tête de dépose est supérieure ou égale à la valeur prédéterminée mais que l'épaisseur de la bande sur le mandrin est inférieure à la valeur d'épaisseur prédéterminée, ce système de contrôle peut alors rétroagir sur l'organe d'application afin de diminuer la pression d'application imposée par l'organe d'application sur la bande lors de son dépôt sur le mandrin. Ainsi, dans ce cas, la diminution d'épaisseur associée à la pression d'application est réduite afin d'obtenir l'épaisseur souhaitée pour la bande sur le mandrin. En revanche, si le système de contrôle d'épaisseur détecte que l'épaisseur de la bande sur la tête de dépose est supérieure à la valeur prédéterminée et que l'épaisseur de la bande sur le mandrin est aussi supérieure à la valeur d'épaisseur prédéterminée, ce système de contrôle peut alors rétroagir sur l'organe d'application afin d'augmenter la pression d'application imposée par l'organe d'application sur la bande lors de son dépôt sur le mandrin. Ainsi, dans ce cas, la diminution d'épaisseur associée à la pression d'application est accentuée afin d'obtenir l'épaisseur souhaitée pour la bande sur le mandrin.

L'exemple de réalisation qui vient d'être décrit comprenant une boucle de rétroaction du système de contrôle d'épaisseur vers l'organe d'application permet avantageusement d'améliorer encore la précision de la régulation d'épaisseur effectuée en vue d'obtenir de manière encore plus fiable l'épaisseur souhaitée pour la bande déposée sur le mandrin.

Dans un exemple de réalisation, l'installation peut en outre comporter un système de contrôle de température configuré pour mesurer la température de la bande sur la tête de dépose et pour comparer la valeur de température mesurée à une valeur de température prédéterminée, l'installation pouvant en outre comporter un premier organe de chauffage configuré pour chauffer la bande dans la filière de l'extrudeuse et un deuxième organe de chauffage configuré pour chauffer la bande sur la tête de dépose, le système de contrôle de température étant en outre configuré pour commander, en fonction du résultat de cette comparaison, l'un au moins des premier et deuxième organes de chauffage.

Cet exemple de réalisation permet avantageusement de contrôler de manière plus fine la température de la bande lors de son dépôt afin d'optimiser son pouvoir adhésif et améliorer l'adhérence de la bande sur le mandrin.

Dans un exemple de réalisation, la tête de dépose peut comprendre un organe d'application de la bande sur le mandrin et l'installation peut en outre comprendre un système d'adaptation de l'épaisseur de la bande configuré pour commander le système de commande de la filière afin d'augmenter la taille de l'orifice de sortie suite à une augmentation de la pression d'application de la bande sur le mandrin imposée par l'organe d'application.

Cet exemple de réalisation peut être avantageux lorsqu'un opérateur ou un système de contrôle automatique détecte un défaut de collage de la bande après application sur le mandrin. Dans ce cas, la pression d'application de la bande peut être augmentée afin de mieux faire adhérer la bande au mandrin. Etant donné que l'augmentation de la pression d'application conduit à une diminution de l'épaisseur de la bande entre la tête de dépose et le mandrin, le système d'adaptation de l'épaisseur augmente alors la taille de l'orifice de sortie de la filière afin d'extruder la bande à une épaisseur supérieure et ainsi compenser la réduction d'épaisseur liée à l'augmentation de la pression d'application. Cet exemple de réalisation est donc avantageux afin de permettre d'optimiser l'adhérence de la bande au mandrin sans pour autant modifier l'épaisseur de la bande déposée sur le mandrin.

Dans un exemple de réalisation, l'installation peut en outre comporter un système d'adaptation de la vitesse configuré pour faire varier la vitesse de dépôt de la bande sur le mandrin et pour réduire, respectivement augmenter, la vitesse d'extrusion de la bande au travers de l'orifice de sortie suite à une réduction, respectivement à une augmentation, de la vitesse de dépôt de la bande sur le mandrin.

Cet exemple de réalisation peut être avantageux lorsqu'un opérateur ou un système de contrôle automatique détecte un défaut d'adhérence ou de positionnement de la bande sur le mandrin. Afin de permettre à un opérateur d'intervenir afin de corriger le défaut détecté, le système d'adaptation de la vitesse est actionné afin de réduire la vitesse de dépôt de la bande sur le mandrin. Simultanément à cette réduction de vitesse, le système d'adaptation de la vitesse commande l'extrudeuse afin de réduire la vitesse d'extrusion de la bande au travers de l'orifice de sortie et ainsi l'adapter à la nouvelle vitesse de dépôt de la bande sur le mandrin. Une fois le défaut d'adhérence ou de positionnement corrigé, le système d'adaptation de la vitesse est à nouveau actionné afin, cette fois-ci, d'augmenter la vitesse de dépôt de la bande et, simultanément à cette augmentation de vitesse, la vitesse d'extrusion de la bande afin de l'adapter à la vitesse de dépôt imposée.

Dans un exemple de réalisation, la filière peut être définie par au moins deux éléments coopérant l'un avec l'autre et mobiles l'un par rapport à l'autre, le système de commande de la filière pouvant être configuré pour déplacer l'un au moins de ces éléments afin de faire varier la taille de l'orifice de sortie de la filière.

La présente invention vise également un procédé de fabrication d'un revêtement de protection thermique d'un corps ou d'un ensemble arrière de propulseur, ledit procédé mettant en oeuvre une installation telle que décrite plus haut et comportant au moins les étapes suivantes :
- extrusion de la bande en matériau élastomère au travers de l'orifice de sortie de la filière,
- transport de la bande extrudée jusqu'à la tête de dépose par le système de convoyage,
- dépôt par la tête de dépose sur le mandrin mis en rotation sur lui-même de la bande extrudée, la tête de dépose et le mandrin étant mis en mouvement relatif le long de l'axe longitudinal du mandrin durant le dépôt, l'épaisseur de la bande extrudée étant mesurée sur la tête de dépose et sur le mandrin par le système de contrôle d'épaisseur,
- comparaison par le système de contrôle d'épaisseur de chaque valeur d'épaisseur mesurée avec une valeur d'épaisseur prédéterminée, et
- commande, en fonction du résultat des comparaisons effectuées, du système de commande de la filière par le système de contrôle d'épaisseur afin de faire varier la taille de l'orifice de sortie et extruder la bande à une épaisseur différente.

Dans un exemple de réalisation, le système de contrôle de température peut mesurer la température de la bande sur la tête de dépose et comparer la valeur de température mesurée à une valeur de température prédéterminée afin de commander, en fonction du résultat de la comparaison de températures effectuée, l'un au moins des premier et deuxième organes de chauffage et faire varier la température de la bande.

Dans un exemple de réalisation, le système de contrôle d'épaisseur peut en outre commander, en fonction du résultat des comparaisons d'épaisseurs effectuées, l'organe d'application de la tête de dépose afin de faire varier la pression imposée par l'organe d'application sur la bande lors de son dépôt sur le mandrin.

Dans un exemple de réalisation, la pression appliquée par l'organe d'application de la tête de dépose peut être augmentée durant le dépôt de la bande sur le mandrin et le système d'adaptation de l'épaisseur de la bande peut, suite à cette augmentation de pression, commander le système de commande de la filière afin d'augmenter la taille de l'orifice de sortie et extruder la bande à une épaisseur supérieure.

Dans un exemple de réalisation, la vitesse de dépôt de la bande sur le mandrin peut être réduite, respectivement augmentée, et le système d'adaptation de la vitesse peut réduire, respectivement augmenter, suite à cette modification de la vitesse de dépôt la vitesse d'extrusion de la bande au travers de l'orifice de sortie.

Dans un exemple de réalisation, le revêtement de protection thermique peut comprendre un empilement de plusieurs couches chacune de ces couches pouvant être formée par dépôt par la tête de dépose de la bande extrudée sur le mandrin. Il est possible d'effectuer le dépôt en plusieurs passages successifs de la tête de dépose le long du mandrin. En variante, le revêtement de protection thermique comprend une unique couche formée par dépôt par la tête de dépose de la bande extrudée sur le mandrin.

Le procédé peut comporter une étape d'usinage du revêtement de protection thermique à un profil extérieur voulu. Il peut également être prévu une étape consistant à polymériser le revêtement par cuisson.

La présente invention vise également un procédé de fabrication d'un corps de propulseur comprenant au moins une enveloppe résistante munie d'un revêtement interne et/ou d'un revêtement externe de protection thermique, dans lequel ledit revêtement de protection thermique est réalisé par mise en oeuvre du procédé tel que décrit plus haut.

La présente invention vise également un procédé de fabrication d'un ensemble arrière de propulseur comprenant au moins une enveloppe résistante munie d'un revêtement externe de protection thermique, dans lequel ledit revêtement de protection thermique est réalisé par mise en ceuvre du procédé tel que décrit plus haut.

Dans un exemple de réalisation, un revêtement interne de protection thermique d'un corps de propulseur peut être réalisé sur le mandrin, l'enveloppe résistante du corps de propulseur pouvant ensuite être déposée sur une surface externe du revêtement de protection thermique ainsi réalisé et solidarisée à cette dernière.

Dans un exemple de réalisation, un revêtement externe de protection thermique peut être réalisé sur une surface externe de ladite enveloppe résistante et solidarisé à cette dernière.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 illustre de manière schématique et partielle un exemple d'installation selon l'invention,
- la figure 2 est une vue en section transversale perpendiculairement à l'axe longitudinal du mandrin de l'installation de la figure 1,
- la figure 3 est une vue schématique et partielle de la filière d'extrusion en coupe selon III-III,
- la figure 4A est un ordinogramme détaillant la régulation effectuée par le système de contrôle d'épaisseur dans le cadre d'un procédé selon l'invention,
- la figure 4B est un ordinogramme détaillant la régulation effectuée par le système de contrôle de température dans le cadre d'un procédé selon l'invention,
- la figure 4C est un ordinogramme détaillant la régulation effectuée par le système d'adaptation de l'épaisseur dans le cadre d'un procédé selon l'invention,
- la figure 4D est un ordinogramme détaillant la régulation effectuée par le système d'adaptation de la vitesse dans le cadre d'un procédé selon l'invention,
- la figure 5 est une vue en coupe longitudinale d'un revêtement de protection thermique obtenu par mise en oeuvre d'un exemple de procédé selon l'invention,
- la figure 6 illustre un corps de propulseur comprenant une enveloppe structurale munie d'un revêtement externe de protection thermique obtenu par mise en oeuvre d'un procédé selon l'invention, et
- la figure 7 illustre un ensemble arrière de propulseur muni d'un revêtement externe de protection thermique obtenu par mise en oeuvre d'un procédé selon l'invention.

### Description détaillée de modes de réalisation

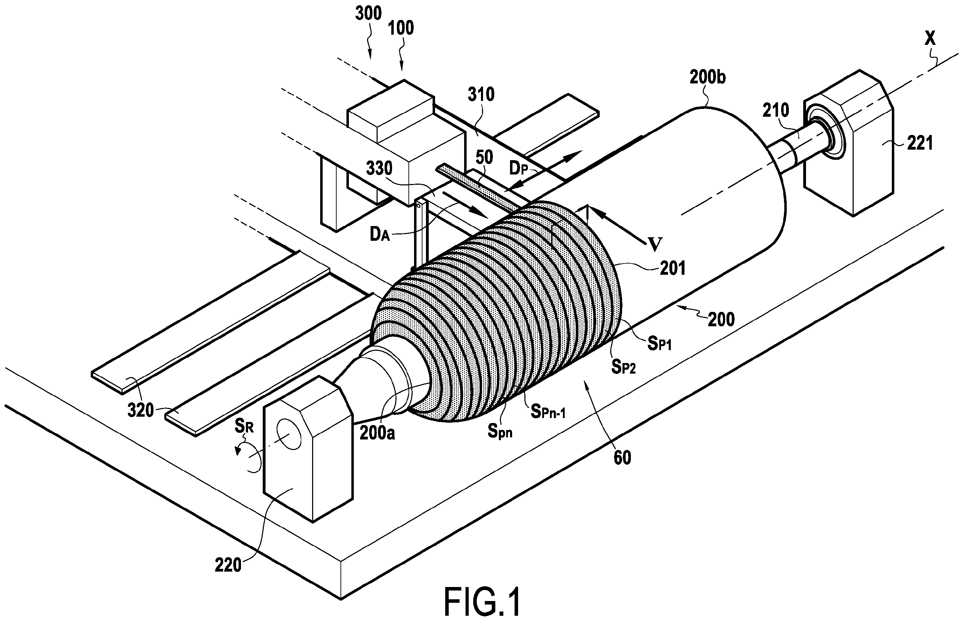

La figure 1 illustre un exemple d'installation 300 permettant de fabriquer un revêtement de protection thermique en matériau élastomère pour un corps ou un ensemble arrière de propulseur. L'installation 300 comprend un dispositif d'extrusion 100 embarqué sur une plateforme chariot 310 et un mandrin 200, par exemple en matériau métallique, monté sur un arbre rotatif 210 supporté par deux broches 220 et 221 dont au moins l'une d'entre elle comprend un moteur (non représenté) pour entrainer en rotation le mandrin 200 dans le sens indiqué par la flèche SR sur la figure 1. L'installation 300 comprend en outre des rails longitudinaux 320, parallèles à l'axe longitudinal X du mandrin 200, sur lesquels repose la plateforme chariot 310, celle-ci étant apte à se déplacer longitudinalement sur les rails 320.

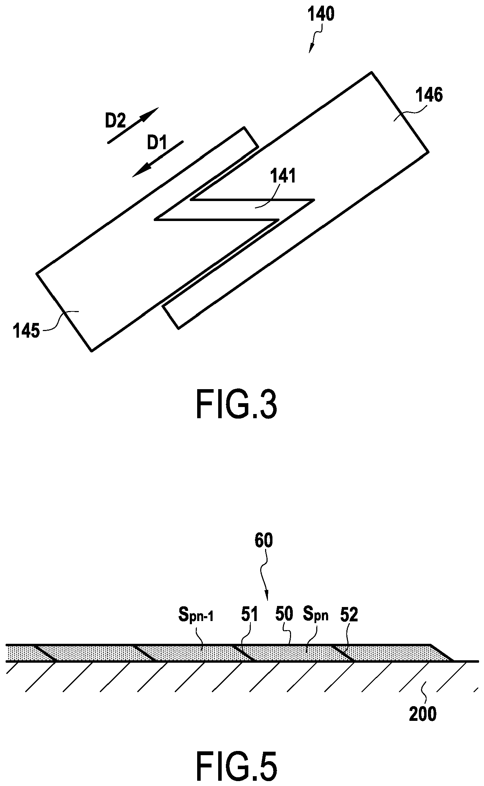

Une bande continue d'un matériau élastomère 50 extrudée par le dispositif d'extrusion 100 est transportée par un tapis de convoyage 330 jusqu'à une tête de dépose afin d'être déposée sur la surface externe du mandrin 200. La bande 50 est déposée par bobinage de spires jointives Sp1, Sp2, ..., Spn-1, Spn autour du mandrin 200. Le bobinage débute à partir d'une position intermédiaire 201 sur le mandrin 200 située entre la première extrémité 200a et la deuxième extrémité 200b du mandrin. Le bobinage de la bande 50 est poursuivi jusqu'à atteindre une des deux extrémités 200a et 200b du mandrin 200, ici l'extrémité 200a. Une fois cette première partie du revêtement de protection thermique réalisée, on reprend le bobinage de la bande 50 à partir de la position intermédiaire 201 que l'on poursuit jusqu'à l'autre extrémité du mandrin, ici l'extrémité 200b, afin de réaliser la deuxième partie du revêtement de protection thermique (non représentée sur la figure 1) permettant de finaliser la fabrication dudit revêtement sur l'ensemble du mandrin 200. On obtient ainsi un revêtement continu de protection thermique 60 comme illustré à la figure 5. Au fur et à mesure de l'avancement du bobinage, la plateforme chariot 310 se déplace le long de l'axe longitudinal X du mandrin 200 dans une des deux directions indiquées par la double flèche DP sur la figure 1

Le revêtement formé peut être monocouche. En variante, le revêtement comprend un empilement de plusieurs couches.

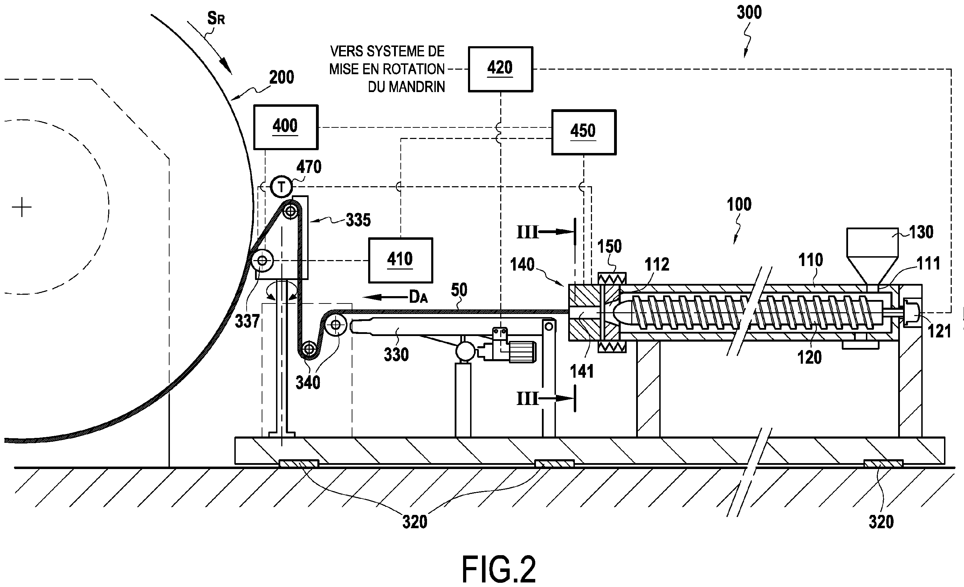

Sur la figure 2, le dispositif d'extrusion 100 a été représenté plus en détails. Ce dispositif 100 comprend de manière connue en soi un corps 110 renfermant une vis sans fin 120 entraînée en rotation par un moteur 121, une trémie d'alimentation 130 en communication avec l'entrée 111 du corps 110 et une filière d'extrusion 140 en communication avec la sortie 112 du corps 110, la filière étant montée sur le corps 110 au moyen d'une tête d'extrusion 150. Le ou les constituants destinés à former la bande 50 sont introduits dans le corps 110 par la trémie d'alimentation sous forme de granulés ou de poudre. La bande en matériau élastomère 50 peut être obtenue à partir d'un matériau élastomère éthylène-propylène-diène monomère (« EPDM »). La vis sans fin 120 malaxe, compresse, cisaille, échauffe et transporte en continu le matériau fluidifié vers la filière d'extrusion 140 qui confère au matériau fluidifié la forme désirée. Comme illustré à la figure 3 la filière d'extrusion 140 peut par exemple présenter un orifice de sortie 141 ayant la forme d'un parallélogramme non rectangle. On ne sort pas du cadre de l'invention lorsque l'orifice de sortie présente une forme différente comme une forme rectangulaire, voire carrée par exemple. Dans l'exemple illustré à la figure 3, la filière d'extrusion est définie par deux éléments 145 et 146 coopérant l'un avec l'autre et mobiles l'un par rapport à l'autre afin de faire varier la taille de l'orifice de sortie 141 de la filière 140 comme il sera détaillé plus bas.

Le corps 110 est équipé de moyens de régulation de la température à l'intérieur de celui-ci (non représentés) afin de contrôler l'état du matériau fluidifié. Après son extrusion de la filière 140, la bande 50 est transportée suivant une direction d'avancée DA jusqu'à des rouleaux de guidage 340 puis jusqu'à la tête de dépose 335. La bande 50 est ensuite enroulée automatiquement sur le mandrin 200 à l'aide d'une tête de dépose 335 qui s'oriente de manière à être parallèle au plan local de dépose du mandrin. La tête de dépose 335 comprend un organe d'application 337 de la bande 50 sur le mandrin 200. Cet organe d'application 337 est destiné à appliquer une pression d'application sur la bande 50 afin de la faire correctement adhérer au mandrin 200. L'organe d'application 337 peut par exemple être sous la forme d'un galet de compactage.

L'installation 300 comporte en outre un système de contrôle d'épaisseur 400 configuré pour mesurer l'épaisseur de la bande 50 sur la tête de dépose 335 et sur le mandrin 200. Le système de contrôle 400 comporte un dispositif de mesure d'épaisseur sans contact connu en soi, par exemple commercialisé sous la référence AT20E-PM111 par la société SICK. Le système de contrôle d'épaisseur 400 est en outre muni de moyens de traitement permettant de comparer chaque valeur d'épaisseur mesurée à une valeur prédéterminée. Le système de contrôle d'épaisseur 400 est configuré pour transmettre une information associée au résultat de ces comparaisons à un système de commande de la filière 450 lequel permet de faire varier la taille de l'orifice de sortie 141 de la filière 140. Dans l'exemple de la filière de la figure 3, le système de commande 450 de la filière permet d'actionner des moyens mécaniques (non représentés) permettant de faire coulisser un des éléments 145 ou 146 dans l'autre élément 146 ou 145 le long des directions indiquées par les flèches D1 et D2. Suite au déplacement des éléments 145 et 146 l'un par rapport à l'autre, la taille de l'orifice de sortie 141 de la filière 140 est modifiée. Une fois la taille de l'orifice de sortie souhaitée atteinte, le système de commande 450 actionne des moyens de blocage (non représentés) permettant de bloquer en position les éléments 145 et 146. Le système de contrôle d'épaisseur 400 est en outre configuré pour transmettre une information associée au résultat des comparaisons d'épaisseur effectuées à l'organe d'application 337 de la tête de dépose 335. La régulation effectuée par le système de contrôle d'épaisseur 400 sera détaillée plus bas.

L'installation peut en outre comporter, comme illustré à la figure 2, un système de contrôle de température 470 configuré pour mesurer la température de la bande 50 sur la tête de dépose 335 et pour comparer la valeur de température mesurée à une valeur de température prédéterminée. Un tel système de contrôle de température 470 comprend au moins un capteur de température ainsi que des moyens de traitement permettant d'effectuer la comparaison de températures. On peut par exemple utiliser un capteur de température commercialisé sous la référence OMEGA OS136. Le système de contrôle de température 470 est configuré pour contrôler un premier organe de chauffage (non représenté) configuré pour chauffer la bande 50 dans la filière 140 de l'extrudeuse 100 ainsi qu'un deuxième organe de chauffage (non représenté) présent au niveau de la tête de dépose 335. La régulation effectuée par le système de contrôle de température 470 sera détaillée plus bas.

L'installation 300 comprend en outre un système d'adaptation de l'épaisseur 410 de la bande 50 configuré pour commander le système de commande 450 de la filière afin d'augmenter la taille de l'orifice de sortie 141 en réponse à une augmentation de la pression d'application de la bande 50 sur le mandrin 200 imposée par l'organe d'application 337. Comme expliqué plus haut, la présence du système d'adaptation de l'épaisseur 410 permet compenser la réduction d'épaisseur liée à l'augmentation de la pression d'application effectuée afin d'améliorer l'adhérence de la bande 50 au mandrin 200.

L'installation 300 comporte en outre un système d'adaptation de la vitesse 420 configuré pour faire varier la vitesse de dépôt de la bande 50 sur le mandrin, donc la vitesse de rotation du mandrin 200, et pour adapter à la vitesse de dépôt de la bande 50 imposée la vitesse d'extrusion de la bande 50 ainsi que la vitesse de transport de la bande sur le tapis de convoyage 330. Comme expliqué plus haut, la présence du système d'adaptation de la vitesse 420 est avantageuse afin de permettre la réalisation d'une opération de maintenance lorsqu'un défaut d'adhérence ou de positionnement de la bande est détecté. L'installation 300 comprend en outre des moyens de contrôle (non représentés) du positionnement de la bande 50 sur le mandrin 200 afin de piloter l'ajustement des spires adjacentes. Ces moyens sont connus en soi, on peut utiliser par exemple pour ce faire un dispositif commercialisé sous la référence AT20E-PM111 par la société SICK.

Les régulations effectuées par le système d'adaptation de l'épaisseur 410 et par le système d'adaptation de la vitesse 420 seront décrites plus bas.

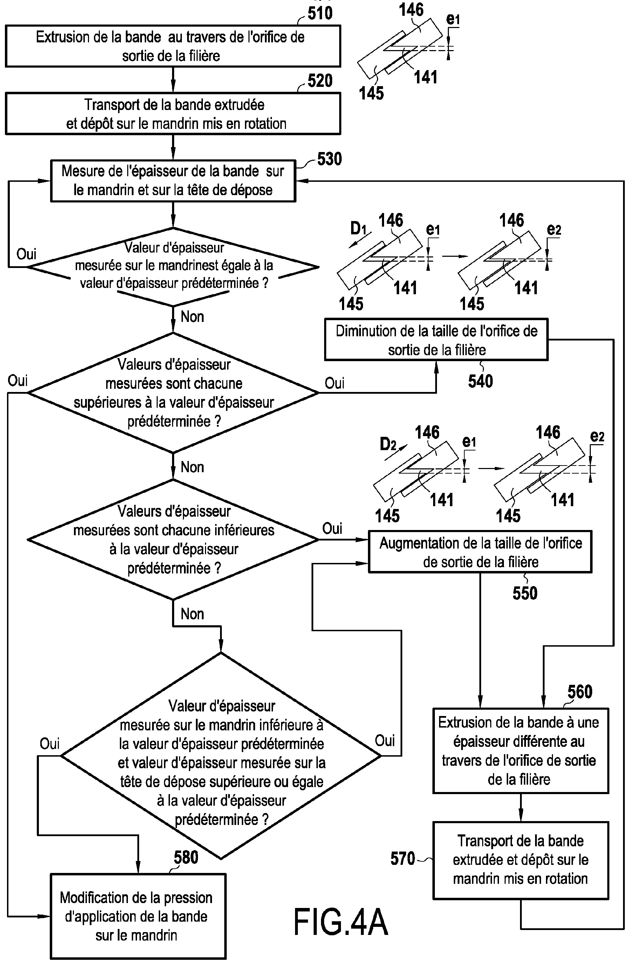

Le mode de fonctionnement du système de contrôle d'épaisseur 400 est schématisé au travers de l'ordinogramme de la figure 4A. Le procédé de fabrication du revêtement de protection thermique débute par l'extrusion de la bande 50 à une première épaisseur e₁ au travers de l'orifice de sortie 141 (étape 500). La bande 50 ainsi extrudée à la première épaisseur e₁ est ensuite acheminée jusqu'à la tête de dépose 335 par le tapis de convoyage 330 puis cette bande 50 est déposée par la tête de dépose 335 sur le mandrin 200 mis en rotation sur lui-même (étape 520). Durant le dépôt, la tête de dépose 335, le tapis de convoyage 330 ainsi que l'extrudeuse 100 sont translatés en bloc le long de l'axe longitudinal du mandrin X par déplacement de la plateforme chariot 310 le long des rails longitudinaux 320. L'épaisseur de la bande 50 extrudée à la première épaisseur e₁ est mesurée sur la tête de dépose 335 et sur le mandrin 200 par le système de contrôle d'épaisseur 400 (étape 530). Le système de contrôle 400 effectue alors une comparaison de l'épaisseur mesurée sur le mandrin avec une valeur d'épaisseur prédéterminée. Dans le cas où l'épaisseur de la bande 50 déposée est égale à l'épaisseur prédéterminée, aucune information n'est transmise au système de commande 450 par le système de contrôle 400 et le système de contrôle 400 continue de mesurer l'épaisseur de la bande 50 sur le mandrin 200 et sur la tête de dépose (étape 530) en vue de détecter une éventuelle déviation ultérieure de l'épaisseur de la bande déposée. Dans le cas où le système de contrôle 400 détecte que l'épaisseur de la bande 50 sur le mandrin 200 n'est pas égale à la valeur d'épaisseur prédéterminée plusieurs actions sont possibles. Si le système de contrôle d'épaisseur détecte que l'épaisseur de la bande sur la tête de dépose 335 et que l'épaisseur de la bande sur le mandrin 200 sont chacune supérieures à la valeur d'épaisseur prédéterminée, le système de contrôle 400 peut actionner le système de commande 450 de la filière afin de réduire la taille de l'orifice de sortie 141 de la filière et extruder la bande à une épaisseur inférieure (étape 540). Dans l'exemple illustré, cette étape se traduit par un coulissement de l'élément 146 le long de l'élément 145 selon la direction D1. Toujours dans le cas où les épaisseurs mesurées sur la tête de dépose 335 et sur le mandrin 200 sont chacune supérieures à la valeur prédéterminée, le système de contrôle 400 peut, en alternative ou en combinaison, actionner l'organe d'application 337 afin de compacter davantage la bande lors de son dépôt sur le mandrin et ainsi obtenir l'épaisseur souhaitée pour la bande sur le mandrin (étape 580). Dans le cas où le système de contrôle d'épaisseur 400 détecte que l'épaisseur de la bande sur la tête de dépose 335 et que l'épaisseur de la bande sur le mandrin 200 sont chacune inférieures à la valeur d'épaisseur prédéterminée, ce système de contrôle 400 rétroagit alors sur le système de commande de la filière afin d'augmenter la taille de l'orifice de sortie de la filière et extruder la bande à une épaisseur supérieure (étape 550). Dans l'exemple illustré, cette étape se traduit par un coulissement de l'élément 146 le long de l'élément 145 selon la direction D2. Si le système de contrôle d'épaisseur 400 détecte que l'épaisseur de la bande sur la tête de dépose est supérieure ou égale à la valeur prédéterminée mais que l'épaisseur de la bande sur le mandrin est inférieure à la valeur d'épaisseur prédéterminée, ce système de contrôle 400 peut alors rétroagir sur l'organe d'application 337 afin de diminuer la pression d'application imposée par l'organe d'application 337 sur la bande lors de son dépôt sur le mandrin (étape 580). En variante ou en combinaison, le système de contrôle d'épaisseur 400 peut, dans ce cas, actionner une augmentation de la taille de l'orifice de sortie de la filière (étape 550).

La modification de la taille de l'orifice de sortie 141 permet d'extruder la bande 50 à une deuxième épaisseur e₂ différente de la première au travers de l'orifice de sortie 141 (étape 560). La bande extrudée à la deuxième épaisseur est ensuite transportée par le tapis de convoyage 330 jusqu'à la tête de dépose 335 pour être déposée sur le mandrin (étape 570). Durant le dépôt de la bande extrudée à la deuxième épaisseur, le système de contrôle 400 continue de mesurer l'épaisseur de la bande sur le mandrin et sur la tête de dépose afin si besoin de continuer à ajuster la taille de l'orifice de sortie 141 (étape 530). Lorsque le système de commande de la filière modifie la taille de l'orifice de sortie de la filière et donc l'épaisseur de la bande extrudée, la température imposée dans la filière de l'extrudeuse et/ou la vitesse d'extrusion de la bande peuvent être ajustées de manière à maintenir la température de la bande à une valeur sensiblement constante.

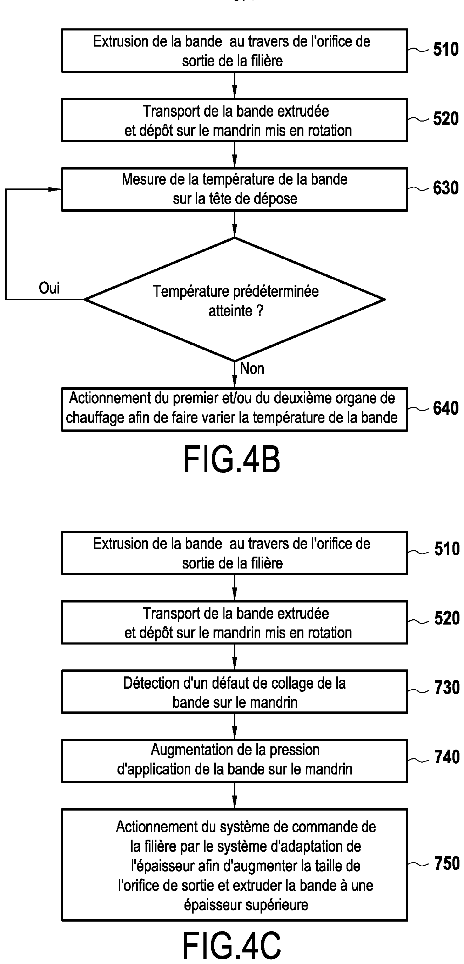

Le mode de fonctionnement du système de contrôle de température 470 est schématisé au travers de l'ordinogramme de la figure 4B. La température de la bande est mesurée sur la tête de dépose 335 par le système de contrôle 470 (étape 630). Si la valeur de température mesurée correspond à la température prédéterminée, le système de contrôle 470 ne modifie pas les paramètres de chauffage et continue de mesurer la température de la bande afin de détecter une éventuelle déviation ultérieure de la température. En revanche, si la valeur de température mesurée est différente de la valeur de température prédéterminée, le système de contrôle de température 470 agit sur le premier et/ou sur le deuxième organe de chauffage afin de faire varier la température de la bande. Si le système de contrôle de température 470 détecte un écart significatif entre la température de bande mesurée et la température de bande souhaitée, il peut être préférable que le système de contrôle de température agisse sur le premier organe de chauffage et éventuellement sur le deuxième organe de chauffage. En revanche, si cet écart est relativement faible, il peut suffire que le système de contrôle de température agisse uniquement sur le deuxième organe de chauffage. Comme mentionné plus haut, la mise en oeuvre du système de contrôle de température permet d'optimiser l'adhérence de la bande sur le mandrin. Le fait d'agir sur le premier organe de chauffage peut s'accompagner d'une modification de la taille de l'orifice de sortie de la filière et donc de l'épaisseur de la bande extrudée et/ou d'une modification de la vitesse d'extrusion et éventuellement d'une modification de la pression d'application de la bande afin d'optimiser la régulation de température effectuée.

Le mode de fonctionnement du système d'adaptation de l'épaisseur 410 est schématisé au travers de l'ordinogramme de la figure 4C. Lorsqu'un défaut d'adhérence de la bande sur le mandrin est détecté (étape 730), l'organe d'application peut être commandé afin d'exercer une pression d'application supérieure sur la bande et améliorer ainsi son adhérence au mandrin (étape 740). Dans ce cas, le système d'adaptation de l'épaisseur 410 va agir sur le système de commande de la filière afin d'augmenter la taille de l'orifice de sortie et extruder la bande à une épaisseur supérieure (étape 750). Lorsque l'on modifie par action du système d'adaptation d'épaisseur la taille de l'orifice de sortie de la filière et donc l'épaisseur de la bande extrudée, la température imposée dans la filière de l'extrudeuse et/ou la vitesse d'extrusion de la bande peuvent être ajustées de manière à maintenir la température de la bande à une valeur sensiblement constante.

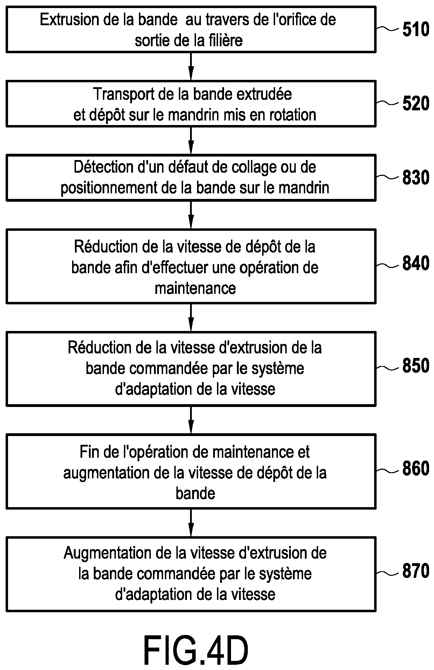

Le mode de fonctionnement du système d'adaptation de la vitesse 420 est schématisé au travers de l'ordinogramme de la figure 4D. Lorsqu'un défaut de collage ou de positionnement de la bande sur le mandrin est détecté, le système d'adaptation de la vitesse est actionné afin de réduire la vitesse de rotation du mandrin et ainsi réduire la vitesse de dépôt de la bande (étape 840). Cette diminution de la vitesse de dépôt permet à un opérateur d'effectuer une opération de maintenance afin de corriger le défaut détecté. Simultanément à cette réduction de la vitesse de dépôt, le système d'adaptation de la vitesse adapte la vitesse d'extrusion et la vitesse du tapis de convoyage (étape 850). Une fois l'opération de maintenance effectuée, le système d'adaptation de la vitesse est à nouveau actionné afin d'augmenter la vitesse de dépôt de la bande (étape 860). Simultanément à cette augmentation de la vitesse de dépôt, le système d'adaptation de la vitesse augmente la vitesse d'extrusion de la bande et la vitesse du tapis de convoyage (étape 870). Lorsque la vitesse d'extrusion de la bande est modifiée, la température imposée dans la filière de l'extrudeuse et/ou la taille de l'orifice de sortie et éventuellement la pression d'application peuvent être ajustées de manière à maintenir la température et l'épaisseur de la bande à des valeurs sensiblement constantes.

On a représenté à la figure 5 une vue en coupe longitudinale d'un exemple de revêtement de protection thermique pouvant être obtenu dans le cadre de l'invention. La bande 50 extrudée par l'exemple de filière illustré à la figure 3 permet de former des spires jointives qui, même si elles se chevauchent partiellement afin d'assurer une continuité dans le revêtement de protection thermique 60 ainsi formé, n'entraînent pas de variation d'épaisseur significative à la surface du revêtement. Ce placement avantageux des spires jointives est illustré sur la figure 5 qui montre que la bande 50, grâce à une section transversale en forme de parallélogramme non rectangle, comprend deux bords 51 et 52 formant chacun un biseau. Ainsi, une spire, par exemple la spire Spn de la bande 50, peut être déposée de manière jointive avec la spire déposée précédemment, ici la spire Spn-1, sans augmentation locale significative de l'épaisseur du revêtement 60. On ne sort toutefois pas du cadre de l'invention lorsque la bande a une section transversale différente, comme une section rectangulaire par exemple et lorsque le revêtement formé présente des zones de surépaisseurs au niveau des bords des spires en contact.

Une fois le revêtement de protection thermique déposé, il est possible d'effectuer la polymérisation par cuisson dudit revêtement. Cette cuisson du revêtement peut s'effectuer sous pression ambiante en autoclave. Elle permet de conférer au revêtement des propriétés mécaniques et thermiques optimales.

La fabrication d'un corps de propulseur comprenant une enveloppe résistante munie d'un revêtement interne ou externe de protection thermique va à présent être décrite.

Dans un exemple de réalisation, l'enveloppe résistante du corps de propulseur peut être déposée sur la surface externe d'un revêtement de protection thermique déposé sur le mandrin par mise en oeuvre du procédé décrit plus haut. Une enveloppe résistante en matériau composite peut être réalisée sur cette surface externe par enroulement filamentaire d'un matériau fibreux préimprégné (par exemple bobinage d'un fil de carbone, de verre ou de polyaramide imprégné d'une résine thermodurcissable non polymérisée). Ensuite, il peut être avantageux de réaliser la polymérisation du revêtement simultanément avec la polymérisation du bobinage filamentaire afin d'obtenir le corps de propulseur muni d'un revêtement interne de protection thermique.

Le procédé selon l'invention peut aussi s'appliquer à la réalisation d'un corps de propulseur muni d'un revêtement externe de protection thermique. Dans ce cas, il est tout d'abord déposé par enroulement filamentaire sur le mandrin le matériau fibreux préimprégné destiné à former l'enveloppe résistante en matériau composite. On réalise ensuite le revêtement de protection thermique externe par mise en oeuvre du procédé tel que décrit plus haut. Une polymérisation simultanée du bobinage filamentaire et du revêtement externe de protection thermique déposés peut être effectuée afin d'obtenir le corps de propulseur muni d'un revêtement externe de protection thermique.

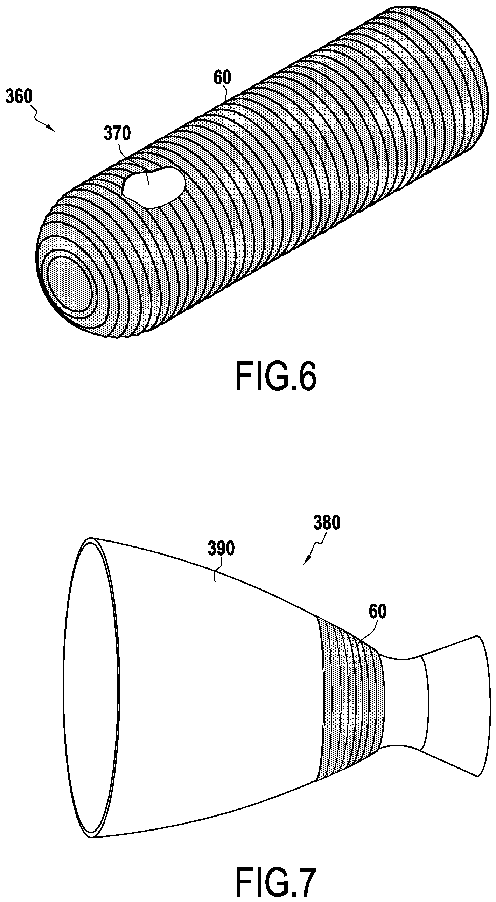

La figure 6 montre un corps de propulseur 360 comprenant une enveloppe structurale 370 munie d'un revêtement externe de protection thermique 60 formé par mise en oeuvre d'un procédé tel que décrit plus haut. On ne sort pas du cadre de l'invention lorsque le corps de propulseur comprend une enveloppe structurale munie d'un revêtement interne de protection thermique formé par mise en oeuvre d'un procédé tel que décrit plus haut.

L'invention n'est pas limitée à la réalisation d'un revêtement de protection thermique sur un corps de propulseur. Elle peut être utilisée pour former un revêtement de protection thermique sur un ensemble arrière de propulseur comme une tuyère 380 illustrée sur la figure 7 qui comprend un revêtement de protection thermique externe 60 au niveau de la partie haute de son divergent 390, le revêtement étant réalisé conformément au procédé de l'invention.

## Revendications

1. Installation (300) pour la fabrication d'un revêtement de protection thermique (60) d'un corps ou d'un ensemble arrière de propulseur, ladite installation (300) comprenant au moins :
- une extrudeuse (100) présentant une filière (140) comprenant un orifice de sortie (141) au travers duquel une bande (50) en matériau élastomère est destinée à être extrudée, l'extrudeuse (100) étant munie d'un système de commande (450) de la filière configuré pour faire varier la taille de l'orifice de sortie (141) de la filière (140),
- un mandrin (200) configuré pour être mis en rotation sur lui-même,
- une tête de dépose (335) configurée pour déposer la bande (50) sur le mandrin (200), la tête de dépose (335) et le mandrin (200) étant configurés pour être mis en mouvement relatif l'un par rapport à l'autre le long de l'axe longitudinal (X) du mandrin (200),
- un système de convoyage (330) configuré pour transporter la bande (50) depuis l'orifice de sortie (141) de la filière (140) jusqu'à la tête de dépose (335), et
- un système de contrôle d'épaisseur (400) configuré pour mesurer l'épaisseur de la bande (50) sur la tête de dépose et sur le mandrin (200) et pour comparer chaque valeur d'épaisseur mesurée à une valeur prédéterminée, ledit système de contrôle d'épaisseur (400) étant en outre configuré pour commander, en fonction du résultat de ces comparaisons, le système de commande (450) de la filière afin de faire varier la taille de l'orifice de sortie (141) de la filière (140).

2. Installation (300) selon la revendication 1, comportant en outre un système de contrôle de température (470) configuré pour mesurer la température de la bande (50) sur la tête de dépose (335) et pour comparer la valeur de température mesurée à une valeur de température prédéterminée, l'installation (300) comportant en outre un premier organe de chauffage configuré pour chauffer la bande (50) dans la filière (140) de l'extrudeuse (100) et un deuxième organe de chauffage configuré pour chauffer la bande (50) sur la tête de dépose (335), le système de contrôle de température (470) étant en outre configuré pour commander, en fonction du résultat de cette comparaison, l'un au moins des premier et deuxième organes de chauffage.

3. Installation (300) selon l'une quelconque des revendications 1 et 2, la tête de dépose (335) comprenant un organe d'application (337) de la bande (50) sur le mandrin (200) et le système de contrôle d'épaisseur (400) étant en outre configuré pour commander, en fonction du résultat des comparaisons d'épaisseurs, la pression d'application de la bande (50) sur le mandrin (200) imposée par l'organe d'application (337).

4. Installation (300) selon l'une quelconque des revendications 1 à 3, la tête de dépose (335) comprenant un organe d'application (337) de la bande (50) sur le mandrin (200) et l'installation (300) comprenant en outre un système d'adaptation de l'épaisseur (410) de la bande configuré pour commander le système de commande (450) de la filière afin d'augmenter la taille de l'orifice de sortie (141) suite à une augmentation de la pression d'application de la bande (50) sur le mandrin (200) imposée par l'organe d'application (337).

5. Installation (300) selon l'une quelconque des revendications 1 à 4, comportant en outre un système d'adaptation de la vitesse (420) configuré pour faire varier la vitesse de dépôt de la bande (50) sur le mandrin (200) et pour réduire, respectivement augmenter, la vitesse d'extrusion de la bande (50) au travers de l'orifice de sortie (141) suite à une réduction, respectivement à une augmentation, de la vitesse de dépôt de la bande (50) sur le mandrin (200).

6. Installation (300) selon l'une quelconque des revendications 1 à 5, la filière (140) étant définie par au moins deux éléments (145 ; 146) coopérant l'un avec l'autre et mobiles l'un par rapport à l'autre, le système de commande (450) de la filière étant configuré pour déplacer l'un au moins de ces éléments (145 ; 146) afin de faire varier la taille de l'orifice de sortie (141) de la filière (140).

7. Procédé de fabrication d'un revêtement de protection thermique (60) d'un corps ou d'un ensemble arrière de propulseur, ledit procédé mettant en oeuvre une installation (300) selon l'une quelconque des revendications 1 à 6 et comportant au moins les étapes suivantes :
- extrusion de la bande (50) en matériau élastomère au travers de l'orifice de sortie (141) de la filière (140),
- transport de la bande (50) extrudée jusqu'à la tête de dépose (335) par le système de convoyage (330),
- dépôt par la tête de dépose (335) sur le mandrin (200) mis en rotation sur lui-même de la bande (50) extrudée, la tête de dépose (335) et le mandrin (200) étant mis en mouvement relatif le long de l'axe longitudinal (X) du mandrin (200) durant le dépôt, l'épaisseur de la bande (50) extrudée étant mesurée sur la tête de dépose (335) et sur le mandrin (200) par le système de contrôle d'épaisseur (400),
- comparaison par le système de contrôle d'épaisseur (400) de chaque valeur d'épaisseur mesurée avec une valeur d'épaisseur prédéterminée, et
- commande, en fonction du résultat des comparaisons effectuées, du système de commande (450) de la filière par le système de contrôle d'épaisseur (400) afin de faire varier la taille de l'orifice de sortie (141) et extruder la bande (50) à une épaisseur différente.

8. Procédé selon la revendication 7, le système de contrôle de température (470) mesurant la température de la bande (50) sur la tête de dépose (335) et comparant la valeur de température mesurée à une valeur de température prédéterminée afin de commander, en fonction du résultat de la comparaison de températures effectuée, l'un au moins des premier et deuxième organes de chauffage et faire varier la température de la bande (50).

9. Procédé selon l'une quelconque des revendications 7 et 8, le système de contrôle d'épaisseur (400) commandant en outre, en fonction du résultat des comparaisons d'épaisseurs effectuées, l'organe d'application (337) de la tête de dépose (335) afin de faire varier la pression imposée par l'organe d'application (337) sur la bande (50) lors de son dépôt sur le mandrin (200).

10. Procédé selon l'une quelconque des revendications 7 à 9, la pression appliquée par l'organe d'application (337) de la tête de dépose (335) étant augmentée durant le dépôt de la bande (50) sur le mandrin (200) et le système d'adaptation de l'épaisseur (410) de la bande commandant, suite à cette augmentation de pression, le système de commande (450) de la filière afin d'augmenter la taille de l'orifice de sortie (141) et extruder la bande (50) à une épaisseur supérieure.

11. Procédé selon l'une quelconque des revendications 7 à 10, la vitesse de dépôt de la bande (50) sur le mandrin (200) étant réduite, respectivement augmentée, et le système d'adaptation de la vitesse (420) réduisant, respectivement augmentant, suite à cette modification de la vitesse de dépôt la vitesse d'extrusion de la bande (50) au travers de l'orifice de sortie (141).

12. Procédé de fabrication d'un corps de propulseur comprenant au moins une enveloppe résistante munie d'un revêtement interne et/ou d'un revêtement externe de protection thermique, dans lequel ledit revêtement de protection thermique (60) est réalisé par mise en oeuvre du procédé selon l'une quelconque des revendications 7 à 11.

13. Procédé de fabrication d'un ensemble arrière de propulseur comprenant au moins une enveloppe résistante munie d'un revêtement externe de protection thermique, dans lequel ledit revêtement de protection thermique (60) est réalisé par mise en oeuvre du procédé selon l'une quelconque des revendications 7 à 11.

14. Procédé selon la revendication 12, dans lequel un revêtement interne de protection thermique d'un corps de propulseur est réalisé sur le mandrin (200), l'enveloppe résistante du corps de propulseur étant ensuite déposée sur une surface externe du revêtement de protection thermique (60) ainsi réalisé et solidarisée à cette dernière.

15. Procédé selon l'une quelconque des revendications 12 à 14, dans lequel un revêtement externe de protection thermique est réalisé sur une surface externe de ladite enveloppe résistante et solidarisé à cette dernière.

## Patentansprüche

1. Anlage (300) für die Herstellung einer Wärmeschutzverkleidung (60) eines Körpers oder einer rückwärtigen Einheit eines Triebwerks, wobei die Anlage (300) mindestens umfasst:
- einen Extruder (100) mit einer Düse (140), die eine Auslassöffnung (141) umfasst, durch die ein Band (50) aus elastomerem Material extrudiert wird, wobei der Extruder (100) mit einem Düsenregelsystem (450) versehen ist, das dazu ausgelegt ist, die Größe der Auslassöffnung (141) der Düse (140) zu verändern,
- einen Dorn (200), der dazu ausgelegt ist, um sich selbst gedreht zu werden,
- einen Ablegekopf (335), der dazu ausgelegt ist, das Band (50) auf dem Dorn (200) abzulegen, wobei der Ablegekopf (335) und der Dorn (200) dazu ausgelegt sind, relativ zueinander entlang der Längsachse (X) des Dornes (200) in Bewegung versetzt zu werden,
- ein Fördersystem (330), das dazu ausgelegt ist, das Band (50) von der Auslassöffnung (141) der Düse (140) zum Ablegekopf (335) zu transportieren, und
- ein Dickenkontrollsystem (400), das dazu ausgelegt ist, die Dicke des Bandes (50) auf dem Ablegekopf und auf dem Dorn (200) zu messen und jeden gemessenen Dickenwert mit einem vorbestimmten Wert zu vergleichen, wobei das Dickenkontrollsystem (400) ferner dazu ausgelegt ist, auf der Grundlage des Ergebnisses dieser Vergleiche das Düsenregelsystem (450) zu steuern, um die Größe der Auslassöffnung (141) der Düse (140) zu verändern.

2. Anlage (300) gemäß Anspruch 1, ferner umfassend ein Temperaturkontrollsystem (470), das dazu ausgelegt ist, die Temperatur des Bandes (50) auf dem Ablegekopf (335) zu messen und den gemessenen Temperaturwert mit einem vorbestimmten Temperaturwert zu vergleichen, wobei die Anlage (300) ferner ein erstes Heizelement, das dazu ausgelegt ist, das Band (50) in der Düse (140) des Extruders (100) zu erhitzen, und ein zweites Heizelement, das dazu ausgelegt ist, das Band (50) auf dem Ablegekopf (335) zu erhitzen, umfasst, wobei das Temperaturkontrollsystem (470) ferner dazu ausgelegt ist, mindestens eines der ersten und zweiten Heizelemente in Abhängigkeit vom Ergebnis dieses Vergleichs zu steuern.

3. Anlage (300) gemäß einem der Ansprüche 1 und 2, wobei der Ablegekopf (335) ein Element (337) zum Anbringen des Bandes (50) auf dem Dorn (200) umfasst und das Dickenkontrollsystem (400) ferner dazu ausgelegt ist, in Abhängigkeit vom Ergebnis der Dickenvergleiche den durch das Anbringungselement (337) ausgeübten Anbringungsdruck des Bandes (50) auf dem Dorn (200) zu steuern.

4. Anlage (300) gemäß einem der Ansprüche 1 und 3, wobei der Ablegekopf (335) ein Element (337) zum Anbringen des Bandes (50) auf dem Dorn (200) umfasst und die Anlage (300) ferner ein Banddickenanpassungssystem (410) umfasst, das dazu ausgelegt ist, das Düsenregelsystem (450) so zu steuern, dass die Größe der Auslassöffnung (141) infolge einer Erhöhung des durch das Anbringungselement (337) ausgeübten Anbringungsdrucks des Bandes (50) auf dem Dorn (200) vergrößert wird.

5. Anlage (300) gemäß einem der Ansprüche 1 bis 4, ferner umfassend ein Geschwindigkeitsanpassungssystem (420), das dazu ausgelegt ist, die Ablegegeschwindigkeit des Bandes (50) auf dem Dorn (200) zu verändern und die Extrusionsgeschwindigkeit des Bandes (50) durch die Auslassöffnung (141) infolge einer Verringerung bzw. Erhöhung der Ablegeschwindigkeit des Bandes (50) auf dem Dorn (200) zu verringern bzw. zu erhöhen.

6. Anlage (300) gemäß einem der Ansprüche 1 und 5, wobei die Düse (140) durch mindestens zwei Elemente (145; 146) begrenzt ist, die miteinander zusammenwirken und relativ zueinander beweglich sind, wobei das Düsenregelsystem (450) dazu ausgelegt ist, mindestens eines dieser Elemente (145; 146) zu bewegen, um die Größe der Auslassöffnung (141) der Düse (140) zu verändern.

7. Verfahren für die Herstellung einer Wärmeschutzverkleidung (60) eines Körpers oder einer rückwärtigen Einheit eines Triebwerks, wobei das Verfahren eine Anlage (300) gemäß einem der Ansprüche 1 bis 6 verwendet und mindestens die folgenden Schritte umfasst:
- Extrudieren des Bandes (50) aus elastomerem Material durch die Auslassöffnung (141) der Düse (140),
- Transportieren des extrudierten Bandes (50) zum Ablegekopf (335) über das Fördersystem (330),
- Ablegen des extrudierten Bandes (50) auf dem sich um sich selbst drehenden Dorn (200) durch den Ablegekopf (335), wobei der Ablegekopf (335) und der Dorn (200) während des Ablegens in Relativbewegung entlang der Längsachse (X) des Dorns (200) gesetzt werden, wobei die Dicke des extrudierten Bandes (50) auf dem Ablegekopf (335) und auf dem Dorn (200) durch das Dickenkontrollsystem (400) gemessen wird,
- Vergleichen jedes gemessenen Dickenwertes mit einem vorbestimmten Dickenwert durch das Dickenkontrollsystem (400) und
- Steuern des Düsenregelsystems (450) durch das Dickenkontrollsystem (400) in Abhängigkeit vom Ergebnis der ausgeführten Vergleiche, sodass die Größe der Auslassöffnung (141) verändert und das Band (50) mit einer anderen Dicke extrudiert wird.

8. Verfahren gemäß Anspruch 7, wobei das Temperaturkontrollsystem (470) die Temperatur des Bandes (50) am Ablegekopf (335) misst und den gemessenen Temperaturwert mit einem vorbestimmten Temperaturwert vergleicht, um mindestens eines der ersten und zweiten Heizelemente in Abhängigkeit vom Ergebnis des ausgeführten Temperaturvergleichs zu steuern und die Temperatur des Bandes (50) zu verändern.

9. Verfahren gemäß einem der Ansprüche 7 und 8, wobei das Dickenkontrollsystem (400) in Abhängigkeit vom Ergebnis der ausgeführten Dickenvergleiche ferner das Anbringungselement (337) des Ablegekopfes (335) steuert, so dass der von dem Anbringungselement (337) auf das Band (50) während seiner Ablage auf dem Dorn (200) ausgeübte Druck verändert wird.

10. Verfahren gemäß einem der Ansprüche 7 bis 9, wobei der von dem Anbringunselement (337) des Ablegekopfes (335) ausgeübte Druck während des Ablegens des Bandes (50) auf dem Dorn (200) erhöht wird und das Banddickenanpassungssystem (410) infolge dieser Druckerhöhung das Düsenregelsystem (450) so steuert, dass die Größe der Auslassöffnung (141) vergrößert und das Band (50) mit einer größeren Dicke extrudiert wird.

11. Verfahren gemäß einem der Ansprüche 7 bis 10, wobei die Ablegegeschwindigkeit des Bandes (50) auf dem Dorn (200) verringert oder erhöht wird und das Geschwindigkeitsanpassungssystem (420) die Extrusionsgeschwindigkeit des Bandes (50) durch die Auslassöffnung (141) infolge dieser Änderung der Ablegegeschwindigkeit verringert oder erhöht.

12. Verfahren zur Herstellung eines Körpers eines Triebwerks, umfassend mindestens eine widerstandsfähige Hülle, die mit einer Innenverkleidung und/oder einer Außenverkleidung zum Wärmeschutz versehen ist, wobei diese Wärmeschutzverkleidung (60) durch Anwendung des Verfahrens gemäß einem der Ansprüche 7 bis 11 hergestellt wird.

13. Verfahren zur Herstellung einer rückwärtigen Einheit eines Triebwerks, umfassend mindestens eine widerstandsfähige Hülle, die mit einer Außenverkleidung zum Wärmeschutz versehen ist, wobei diese Wärmeschutzverkleidung (60) durch Anwendung des Verfahrens gemäß einem der Ansprüche 7 bis 11 hergestellt wird.

14. Verfahren gemäß Anspruch 12, bei dem eine Innenverkleidung zum Wärmeschutz eines Triebwerkskörpers auf dem Dorn (200) hergestellt wird, wobei die widerstandsfähige Hülle des Triebwerkskörpers anschließend auf einer Außenfläche der so hergestellten Wärmeschutzverkleidung (60) abgelegt und mit dieser fest verbunden wird.

15. Verfahren gemäß einem der Ansprüche 12 bis 14, bei dem eine Außenverkleidung zum Wärmeschutz auf einer Außenfläche der widerstandsfähigen Hülle hergestellt und mit dieser fest verbunden wird.

## Claims

1. An installation (300) for fabricating a thermal protection covering (60) of a body or of a rear assembly for a thruster, said installation (300) comprising at least:
• an extruder (100) presenting a die (140) having an outlet orifice (141) through which a strip (50) of elastomer material is to be extruded, the extruder (100) being provided with a die control system (450) configured to vary the size of the outlet orifice (141) of the die (140) ;
• a mandrel (200) configured to be set into rotation about its axis;
• a deposition head (335) configured to deposit the strip (50) on the mandrel (200), the deposition head (335) and the mandrel (200) being configured to be set into movement relative to each other along the longitudinal axis (X) of the mandrel (200);
• a conveyor system (330) configured to convey the strip (50) from the outlet orifice (141) of the die (140) to the deposition head (335); and
• a thickness monitoring system (400) configured to measure the thickness of the strip (50) on the deposition head and on the mandrel (200) and to compare each measured thickness value with a predetermined value, said thickness monitoring system (400) also being configured, as a function of the result of such comparisons, to control the die control system (450) so as to cause the size of the outlet orifice (141) of the die (140) to vary.

2. An installation (300) according to claim 1, further comprising a temperature monitoring system (470) configured to measure the temperature of the strip (50) on the deposition head (335) and to compare the measured temperature value with a predetermined temperature value, the installation (300) further comprising a first heater member configured to heat the strip (50) in the die (140) of the extruder (100), and a second heater member configured to heat the strip (50) on the deposition head (335), the temperature monitoring system (470) further being configured to act as a function of the result of the comparison to control at least one of the first and second heater members.

3. An installation (300) according to claim 1 or claim 2, the deposition head (335) comprising an applicator member (337) for applying the strip (50) on the mandrel (200), and the thickness monitoring system (400) is further configured to act as a function of the result of the thickness comparisons, to control the application pressure of the strip (50) against the mandrel (200) as imposed by the applicator member (337).

4. An installation (300) according to any one of claims 1 to 3, the deposition head (335) comprising an applicator member (337) for applying the strip (50) on the mandrel (200) and the installation (300) further comprising a strip thickness adapter system (410) for adapting the thickness of the strip and configured to control the die control system (450) so as to increase the size of the outlet orifice (141) following an increase in the application pressure of the strip (50) against the mandrel (200) as imposed by the applicator member (337).

5. An installation (300) according to any one of claims 1 to 4, further comprising a speed adapter system (420) configured to vary the speed at which the strip (50) is deposited on the mandrel (200) and to reduce, or respectively to increase, the speed of extrusion of the strip (50) through the outlet orifice (141) following a reduction, or respectively an increase, in the deposition speed of the strip (50) on the mandrel (200).

6. An installation (300) according to any one of claims 1 to 5, the die (140) being defined by at least two elements (145; 146) that co-operate with each other and that are movable relative to each other, the die control system (450) being configured to move at least one of these elements (145; 146) so as to vary the size of the outlet orifice (141) of the die (140).

7. A method of fabricating a thermal protection covering (60) of a body or of a rear assembly for a thruster, said method using an installation (300) according to any one of claims 1 to 6 and comprising at least the following steps:
• extruding the strip (50) of elastomer material through an outlet orifice (141) of the die (140);
• conveying the extruded strip (50) to the deposition head (335) by means of the conveyor system (330) ;
• using the deposition head (335) to deposit the extruded strip (50) on the mandrel (200) set into rotation about its own axis, the deposition head (335) and the mandrel (200) being set into relative movement along the longitudinal axis (X) of the mandrel (200) during deposition, the thickness of the extruded strip (50) being measured on the deposition head (335) and on the mandrel (200) by the thickness monitoring system (400) ;
• the thickness monitoring system (400) comparing each measured thickness value with a predetermined thickness value; and
• as a function of the results of the comparisons performed, the thickness monitoring system (400) controlling the die control system (450) to vary the size of the outlet orifice (141) and extrude the strip (50) at a different thickness.

8. A method according to claim 7, the temperature monitoring system (470) measuring the temperature of the strip (50) on the deposition head (335) and comparing the measured temperature value with a predetermined temperature value in order to act as a function of the result of the temperature comparison that has been performed to control at least one of the first and second heater members in order to vary the temperature of the strip (50).

9. A method according to claim 7 or claim 8, the thickness monitoring system (400) acting as a function of the results of the thickness comparisons that have been performed to control the applicator member (337) of the deposition head (335) so as to vary the pressure imposed by the applicator member (337) on the strip (50) while it is being deposited on the mandrel (200).

10. A method according to any one of claims 7 to 9, the pressure applied by the applicator member (337) of the deposition head (335) being increased while the strip (50) is being deposited on the mandrel (200) with the strip thickness adapter system (410) acting after this increase in pressure to control the die control system (450) so as to increase the size of the outlet orifice (141) and extrude the strip (50) at a greater thickness.

11. A method according to any one of claims 7 to 10, in which the speed of deposition of the strip (50) on the mandrel (200) is reduced, or respectively increased, and the speed adapter system (420) reduces, or respectively increases, the speed of extrusion of the strip (50) through the outlet orifice (141) following this modification in the deposition speed.

12. A method of fabricating a thruster body comprising at least one strong shell provided with an internal and/or external thermal protection covering, wherein said thermal protection covering (60) is made by performing the method according to any one of claims 7 to 11.

13. A method of fabricating a thruster rear assembly comprising at least a strong shell provided with an external thermal protection covering, wherein said thermal protection covering (60) is made by performing the method according to any one of claims 7 to 11.

14. A method according to claim 12, wherein an internal thermal protection covering of a thruster body is made on the mandrel (200), and the strong shell of the thruster body is then deposited on an outside surface of the thermal protection covering (60) as made in this way and is bonded thereto.

15. A method according to any one of claims 12 to 14, wherein an external thermal protection covering is made on an outside surface of said strong shell and is bonded thereto.
